# EUROPÄISCHE PATENTSCHRIFT

(11) **EP 4 464 612 B1**
(45) Veröffentlichungstag und Bekanntmachung des Hinweises auf die Patenterteilung: **25.03.2026**
(21) Anmeldenummer: 24176121.2
(22) Anmeldetag: 15.05.2024
(51) Int. Cl.: B65D 1/02, B65D 23/08, B65D 25/16

(54) **MEHRWEGGEBINDE UND REGENERATIONSVERFAHREN**
REUSABLE CONTAINERS AND REGENERATION PROCESSES
RÉCIPIENTS RÉUTILISABLES ET PROCESSUS DE RÉGÉNÉRATION

(30) Priorität: 16.05.2023 DE 102023002008
(43) Veröffentlichungstag der Anmeldung: 20.11.2024
(73) Patentinhaber: HN Innovation FlexCo, 1030 Wien (AT)
(72) Erfinder: Heinemann, Christian, 98693 Ilmenau (DE)
(74) Vertreter: Lichtnecker, Markus Christoph

(56) Entgegenhaltungen:
- EP-A1- 0 691 278
- DE-A1- 4 041 266
- US-A1- 2024 140 656
- US-B1- 6 537 408

## Beschreibung

Die Erfindung betrifft ein ökologisch nachhaltiges stapelbares Mehrweggebinde aus Papierfaser, Kunststoff und/oder Metall als Transportbehälter für Flüssigkeiten und Schüttgüter, insbesondere für Farben und andere flüssige, pastöse oder schüttfähige Produkte, z.B. Malerprodukte, sowie ein Regenerationsverfahren für ein solches Mehrweggebinde.

Aus dem Stand der Technik sind für die Abfüllung und für den Transport von flüssigen Farben transportable Behälter in unterschiedlichen Varianten bekannt. Diese sind üblicherweise eimerförmig ausgebildet. Dabei gibt es runde, typischerweise als zylindrische Behälter geformte Malergebinde. Aber auch ovale, eckige oder Mischformen daraus werden verwendet. Das Dokument EP 691 278 A1 beschreibt ein Beispiel für einen derartigen Behälter.

Typischerweise sind die Behältnisse aus blechernen oder kunststoffbasierten Tiefziehkörpern hergestellt und mit einem Deckel versehen. Um ökologischen Aspekten und Zielsetzungen der Kreislaufwirtschaft besser zu entsprechen sind zunehmend auch Behälter aus Pappe bekannt. Nachteilig ist hier der geringe Diffusionswiderstand. Vereinzelt eingesetzte Behälter aus Pappe müssen durch eine Innenbeschichtung flüssigkeitsfest gemacht werden. Die Beschichtung wirkt sich wiederum Nachteilig auf die Wiederverwendbarkeit und das Recycling aus. Durch das eingefüllte Gut, z.B. Farbe, kann es zu Verunreinigungen der Beschichtung kommen, was eine Wiederverwendung ausschließt. Zum Recyceln muss die Beschichtung aufwendig von der Pappe getrennt werden. Dieses aufwändige und teure Verfahren wirkt sich zudem nachteilig auf den Preis des Behälters aus. Behälter aus Blech oder Kunststoff sind im Sinne der Nachhaltigkeit, insbesondere dem Ressourcenverbrauch, der Mehrfachbenutzung und dem Recycling eher nachteilig, können aber durch den in der Beschreibung dargestellten Prozess auch für eine Mehrfachnutzung, Wiederbefüllung, Wiederverwendung ertüchtigt werden.

Eine dem gegenüber vorteilhafte Lösung für ein Mehrweggebinde wird beispielsweise durch die DE 10 2020 003 698 A1 beschrieben. Das hier beschriebene Mehrweggebinde weist einen formstabilen Außenbehälter auf, in dem ein innerer Layer angeordnet ist. Der Außenbehälter ist aus Wickelschichtpapiermaterial ausgebildet. Der innere Layer ist als ein folienartiger Einsatz ausgebildet, der in dem Außenbehälter aufgenommen ist und zu diesem in einem Haftverbund steht. Ein Deckel wird eingepresst, so dass sich radial exzentrisch ein Druckkontakt zu dem oberen Randabschnitt des inneren Layers ausbildet, der sowohl den Deckel fixiert als auch eine Dichtebene zwischen dem Deckel und dem Layer ausbildet. Der innere Layer und der Deckel werden bestimmungsgemäß nach einem Gebrauch entsorgt und der Außenbehälter kann zur Ressourcenschonung mehrmals verwendet werden.

Weiterhin beschreibt die DE 40 41 266 A1 ein Mehrwegbehältnis mit einem ähnlichen Aufbau. Neben dem Konzept eines wiederverwertbaren Außenbehälters wird ein Innenbehälter beschrieben, der mittel UV-Strahlung zersetzbar oder biologisch abbaubar ist.

Nachteilig ist hierbei, dass einer vollwertigen mehrfachen Wiederverwendung des Außenbehälters häufig Beschädigungen durch Gebrauch und Verschmutzungen entgegenstehen. Zudem ist nach Öffnung des Mehrweggebindes entweder eine Wiederverschließbarkeit nur umständlich möglich oder der Innenbehälter ist in einer solchen Weise mit dem Außenbehälter verbunden, dass die Entnahme des Innenbehälters erschwert ist.

Die Aufgabe der Erfindung ist es, ein nachhaltiges, ressourcenschonendes und einfach und kostengünstig herstellbares Mehrweggebinde als Transport- und Mischbehälter bereitzustellen sowie ein Regenerationsverfahren für ein solches Mehrweggebinde aufzuzeigen.

Die Aufgabe wird bezogen auf das Mehrweggebinde durch die im Patentanspruch 1 aufgeführten Merkmale und bezogen auf das Regenerationsverfahren durch die in den Patentansprüchen 6 und 7 aufgeführten Merkmale gelöst. Bevorzugte Weiterbildungen ergeben sich aus den Unteransprüchen.

Als Mehrweggebinde im Sinne der vorliegenden Erfindung wird ein Behältnis insbesondere für Malerfarben sowie für sonstige flüssige, pastöse oder schüttfähige Produkte verstanden, die nachfolgend zusammengefasst als Behälterinhalt bezeichnet werden. Hierzu zählen insbesondere Maler- oder Bauprodukte, aber beispielsweise auch Öle, Fette oder Dünger.

Das erfindungsgemäße Mehrweggebinde weist als wesentliche Komponenten einen Behältergrundkörper, einen Formeinsatz, einen Klebering, eine Banderole und einen Deckel auf.

Der Behältergrundkörper weist einen hohlen, z.B. hohlzylindrischen, Grundkörpermantel und einen Grundkörperboden auf und ist aus einem Papierfaserwerkstoff, Kunststoffwerkstoff und/oder Metallwerkstoff ausgebildet. Bei dem Werkstoff kann insbesondere als Wickelmaterial als auch mittels Faserguss-, oder Spritzgussverfahren oder Papierblisterverfahren bereitgestellt werden. Der Behältergrundkörper stellt die raumbildende und stabilitätsbegründende Struktur dar. Er bildet die Form des Behälters aus und nimmt die durch den Behälterinhalt als auch die von außen einwirkenden Kräfte auf. Durch die Größe und Beschaffenheit des Behältergrundkörpers wird auch das Volumen und die Masse des Behälterinhalts definiert. Hohlzylindrisch ist im Sinne der vorliegenden Erfindung nicht im strengen geometrischen Sinne zu verstehen. Die Form des Behältergrundkörpers ist vorzugsweise leicht konisch, oval konisch und/oder eckig nach oben öffnend ausgebildet, ohne auf diese Form beschränkt zu sein. Nach unten ist der Behältergrundkörper mit einem Grundkörperboden abgeschlossen, der vorzugsweise mit dem Grundkörpermantel verklammert, verklebt und/oder eingepresst ist. Grundkörpermantel und Grundkörperboden können auch Abschnitte eines monolithischen Behältergrundkörpers sein.

Der Formeinsatz ist aus einem formstabilen Kunststofffolienmaterial ausgebildet. Dieser kleidet den Behältergrundkörper innen aus. Hierfür weist der Formeinsatz einen behälterförmigen Hauptabschnitt auf, der in dem Behältergrundkörper angeordnet ist.

Zusammen mit dem Behältergrundkörper wird so ein mehrschichtiger Wandungsaufbau gebildet. Durch den behälterförmigen Hauptabschnitt wird eine flüssigkeitsfeste und diffusionsdichte Schicht gebildet und der äußere Papp-, Kunststoff- und/oder Metallbehälter bildet die stabile Form des Behältnisses aus. Der behälterförmige Hauptabschnitt ist mit einer korrespondierenden Form und Größe in den Behältergrundkörper eingesetzt ohne mit diesem an der Kontaktfläche verbunden werden zu müssen. Vorteilhaft ist, dass es keiner Trennung der beiden verschiedenen Materialien bedarf, sondern dass der Formeinsatz einfach entnommen werden kann und dass so eine hohe Recyclingfähigkeit und Wiederverwendbarkeit erreicht wird.

Insbesondere kann die Kunststofffolie bei der Herstellung des Formeinsatzes durch ein thermisch geführtes Tiefziehen bereits auf die Behältergrundkörperinnenform angepasst werden, was zu einer einfacheren Zusammensetzbarkeit führt.

Weiter weist der Formeinsatz einen Überkrempungsabschnitt auf, der den hohlen Grundkörpermantel an einem Mantelrandabschnitt übergreift. Der Formeinsatz kann so bis zur Überkrempung in den Behältergrundkörper eingeschoben werden. Dann schmiegt sich die Umkrempung an die Oberkante des Behältergrundkörpers an und der Behälter ist vollständig ausgekleidet. Zudem ist auch der Mantelrandabschnitt sowie ggf. Formung für die Deckelaufnahme des Grundkörpermantels außenseitig überdeckt und somit in diesem kritischen Bereich vor Verschmutzung, insbesondere abgestrichene Farbe, geschützt.

Der Klebering ist z.B. an einer Überkrempungsaußenseite angeordnet.

Vorzugsweise handelt es sich um ein doppelseitiges Klebeband, oder Haft-Hotmelt Klebstoff. Alternativ kann der Klebering auch an der Banderole als Klebeband oder streifenförmige Klebebeschichtung, oder Haft-Hotmelt bereitgestellt werden, so dass bei dieser Variante die Anordnung an der Überkrempungsaußenseite erst mit dem Anbringen der Banderole erfolgt.

Die Banderole ist umlaufend an einer Mantelaußenseite angeordnet. Hierbei umschließt diese den hohlen Grundkörpermantel an der Mantelaußenseite sowie den Überkrempungsabschnitt. Die Banderole liegt dabei auf dem Klebering auf und bildet mit diesem eine umlaufende Kontaktklebenaht aus. Somit steht sie in einem Klebeverbund mit dem Klebering. Die umlaufende Kontaktklebenaht bildet zugleich eine Kapillarsperre, so dass ein flüssiger Behälterinhalt, beispielsweise Farbe, nicht hinter die Banderole laufen kann. Sie weist zudem eine axial erstreckte Banderolenklebenaht auf, die die Banderole zu einem Mantel verschließt, der den Grundkörpermantel außenseitig umgibt und überdeckt. Die Banderole bildet vorteilhaft zugleich einen Verschmutzungsschutz für den Grundkörpermantel als auch einen Träger für die Produktbeschriftung ähnlich einem Etikett aus. Die Banderole ist nicht mit dem Behältergrundkörper verklebt, sondern mittels der umlaufenden Kontaktklebenaht relativ zu dem Formeinsatz in ihrer Lagebeziehung festgelegt. Vorteilhaft ist bei einer leicht konischen Grundform des Behältergrundkörpers eine axiale Verschiebung der Banderole noch oben ausgeschlossen, so dass dadurch der Formeinsatz mittelbar über die Kontaktklebenaht formschlüssig ebenfalls gegen eine axiale Verschiebung nach oben gesichert ist.

Ein Einsatz ist in Verbindung mit einer Schutzbanderole für die Außenhülle und dazugehörigem Bodenschutz (Verschmutzungsschutz) sowie als Erweiterung als Stoß- und/oder Verschmutzungsschutz, als Kombinationsschutz durch ein spezielles nachhaltiges Papierfaserformteil, aus z.B. Papierblister, Papierfaserguss, Papierspritzguss und/oder weiterer Papierfaser verwendeten Technologien, ggf. in Verbindung mit einer Pufferzone durch eine spezielle Ausformung im Querschnitt möglich. Die Pufferzone kann die geometrische Ausformung des Papierfaserformteils bilden.

Durch den möglichen Schmutzschutz in Kombination mit dem Stoßschutz ist es möglich, die Sekundärverpackung optimal zu schützen und dadurch eine vielfache Verwendung ohne Beschädigung bei marktüblichem Kunststoff und Blechgebinden zu ermöglichen.

Der Bodenschutz kann durch ein Klick- und/oder Rastsystem durch eine besondere technische Ausbildung am Bodenschutz Innenrand erzeugt werden. Durch eindrücken des Kunststoffs und/oder Metallgebindes, z.B. Blechgebindes, in das Bodenformteil, wird dieses ohne Klebeverbindung montiert und kann entsprechend auch so problemlos wieder demontiert werden.

Im Bedarfsfall ist - je nach Anwendungsart - auch eine Ausführungsform ohne Bodenschutz denkbar.

Die Verklebung der Banderole mit einer anderen Austauschkomponente und zudem lediglich im Bereich der Umkrempung vereinfacht besonders vorteilhaft die Trennung der Komponenten im Recyclingfall. Nach dem Lösen der Kontaktklebenaht ist sowohl die Banderole als auch der Formeinsatz problemlos entnehmbar. Dies ermöglicht zudem aufgrund der geringen Klebekräfte, die lediglich zur Fixierung dienen, die Trennung der Komponenten zu automatisieren, beispielswese mittels Industrieroboter, und den Prozess somit wesentlich zu rationalisieren.

Ebenfalls sind folgende Anwendungsmöglichkeiten zum Schutz der Außenhülle mit oder ohne Bodenschutz möglich. Die Verklebung erfolgt ebenfalls im Bereich wie oben beschrieben.
1. Ein Kunststoffformliner (Formeinsatz) in einer produktspezifischen je nach Anwendungsfall definierten Dicke in gleicher Formung wie das jeweilige Gebinde, im Bereich der Außenfläche, des jeweiligen Kunststoff oder Blechgebindes
2. Statt der ökologischen Graspapierbanderole alternativ eine Kunststoffbanderole
3. Ein Formteil in gleicher Formung aus Papierspritzguss oder Papierfaserguss, oder ähnlichen Herstellungsverfahren incl. Bodenschutz oder ohne Bodenschutz.

Somit folgen alle Anwendungsbeispiele für Papier, Kunststoff und Metallgebinde derselben Grundidee.

Beispielhafte Bauarten werden im Folgenden dargestellt:
Bauart 1 (Kunststoffgebinde)
   Durch die vollflächige Verklebung der Papierbanderole im Bereich der Formliner Bordur mit ggf. angesetzten flexiblen und sich unmittelbar an den auskragenden Außenrand des Kunststoffgebindes anlegenden Kunststofffabschnittes durch Adhäsionskräfte (z.B. Adhäsionsfolie oder gleichwertig), oder des Kunststoffbeutelsystems als Überlappung zum einen als vollumfänglicher Schutz der Außenfläche im Bereich der auskragenden Deckelaufnahme, wird sowohl der Gebinderand vor Verschmutzungen geschützt sowie als Klebefläche für die Banderole, als auch den Formliner genutzt, und ist als Kombinationsschutz zu sehen. Dieser selbstklebende Kunststoffabschnitt greift unmittelbar unter diese Auskragung wo sich die Banderole, als auch der Formliner durch Überlappungseffekt verkleben lassen, ohne dass dabei der Klebstoff in Berührung mit der Außenfläche des Kunststoffgebindes kommt und somit die Sekundärverpackung vollständig ohne Klebstoffrückstände sauber gehalten werden kann. Damit wird es für den Wiederbefüllungsprozess ermöglicht, sämtliche Materialarten sortenrein voneinander trennen zu können.
Bauart 2 (Metallgebinde)
   Durch die vollflächige Verklebung der Papier- oder Kunststoffbanderole im Bereich der Formliner Bordur wie bereits beschrieben. Das Prinzip wird dort auf handelsübliche Metallgebinde überbunden.

Damit können marktübliche Kunststoffgebinde/Metallgebinde in eine Circular Economy integriert werden. Dies ermöglicht eine problemlose Wiederbefüllung durch vollumfänglichen Schutz dieser Gebindearten.

Der Deckel weist einen formstabilen Deckelgrundkörper und eine Deckelformfolie auf. Dies soll auch Anwendung bei Kunststoff- und/oder Metallgebinden finden. Der formstabile Deckelgrundkörper ist die deckelseitig formgebende und stabilitätsbildende Struktur und weist eine umlaufende axiale Randnut auf. Der Deckelgrundkörper ist vorzugsweise in gleicher Weise wie der Behältergrundkörper als Papierblister, Papierfaserguss oder aus einem anderen Papierfaserwerkstoff ausgebildet. Ferner sind Kunststoffe, beispielsweise aus Rezyklat, als Material möglich. Hier wird beispielhaft die Deckelausführung für das Pappgebinde beschrieben.

Dem Deckelgrundkörper ist korrespondierend zu seiner Form eine Deckelformfolie zugeordnet, die an dem Deckelgrundkörper an einer Deckelgrundkörperinnenseite angeordnet ist. Die Deckelformfolie ist an der Deckelgrundkörperinnenseite vorzugsweise punktuell angeklebt oder wird durch Adhäsionskräfte fixiert, und dient als Verschmutzungsschutz für den Deckelgrundkörper (z.B. Kunststoff und Metall), für das Pappgebinde z.B. als Verschmutzungs- und/oder Diffusionssperre. Der Deckelgrundkörper aus Papierfaser und/oder Papierspritzguss weist bevorzugt eine Imprägnierung auf und ist damit feuchtigkeitsabweisend ausgerüstet.

Das Mehrweggebinde ist für einen Verschlusszustand in nachfolgend beschriebener Weise ausgebildet.

In dem Verschlusszustand ist der Deckel auf den hohlen Grundkörpermantel aufgesetzt. Der Deckel dient nicht nur zum sicheren Verschluss des Behälters, sondern stabilisiert diesen auch, sodass dieser gefahrlos gestapelt transportiert werden kann. Die axiale Randnut des Deckelgrundkörpers übergreift im Verschlusszustand den Mantelrandabschnitt. Zwischen der axialen Randnut und dem Mantelrandabschnitt ist die Deckelformfolie umlaufend dichtend gegen den Formeinsatz gepresst. Die Dichtebene wird somit vorteilhaft unmittelbar zwischen der Deckelformfolie und dem Formeinsatz gebildet. Dadurch wird das Gebinde flüssigkeits- und luftdicht verschlossen. Ein Austritt des Behälterinhalts ist ausgeschlossen und der Behälterinhalt kann über einen längeren Zeitraum gelagert werden, ohne an Qualität zu verlieren.

Der Behältergrundkörper und der Deckelgrundkörper sowie die Verbindung zwischen diesen beiden Grundkomponenten sind so stabil ausgebildet, dass diese den massiven Beschleunigungs- und Fliehkräften in einem Mischvorgang mit Biaxial- und Zentrifugalshakern standhalten. Ferner ist der Behältergrundkörper in seinem Zusammenwirken mit dem Formeinsatz so beschaffen, dass ein Mischvorgang auch mittels eines handelsüblichen elektrischen Handrührwerks durchgeführt werden kann.

Das erfindungsgemäße Mehrweggebinde ist durch Komponenten recyclingbezogen unterschiedlicher Kategorien gekennzeichnet.

Der Behältergrundkörper und Deckelgrundkörper sind als Wiederverwendungskomponenten ausgebildet.

Der Formeinsatz, der Klebering, die Banderole und die Deckelformfolie sind als mit den Wiederverwendungskomponenten lösbar verbundene Austauschkomponenten ausgebildet. Die Kategorisierung als Austauschkomponente bedeutet nicht notwendig, dass nach jeder Verwendung ein Austausch erfolgen muss. So ist beispielsweise eine wiederholte Verwendung des Formeinsatzes möglich, wenn dieser mit einer Adhäsionsfolie ausgekleidet ist.

Die mehrfache Verwendbarkeit der beiden Grundkörper als Wiederverwendungskomponenten spart natürliche Ressourcen und reduziert die Verpackungskosten für die betreffenden als Behälterinhalt in Betracht kommenden Produkte.

Vorteilhaft wurde überraschend eine Lösung gefunden, bei der mit einfachen Mitteln die funktionalen Anforderungen an die Komponenten bei der Verwendung und die funktionalen Anforderungen an die Komponenten für eine nachhaltige Produktgestaltung aufeinander abgestimmt werden konnten. Die Wiederverwertungskomponenten übernehmen die Ausbildung der raum- und stabilitätsbildenden Struktur, müssen jedoch keinen besonderen Anforderungen hinsichtlich der Flüssigkeits- und Diffusionsdichtigkeit entsprechen und können somit kostengünstig bereitgestellt werden. Die Austauschkomponenten sind weitgehend von dem Erfordernis der Formstabilität befreit und können somit unter besonderer Materialeinsparung bereitgestellt werden, was aufgrund der Einwegnutzung der Austauschkomponenten besonders vorteilhaft ist.

Vorteilhaft werden zudem die Wiederverwertungskomponenten durch die Austauschkomponenten umfassend geschützt, so dass eine hohe Anzahl von Wiederverwendungszyklen ermöglicht wird. Insbesondere wird der Behältergrundköper innenseitig und außenseitig umschlossen. Zudem werden etwaige Verschmutzungen der Mantelaußenseite im Wiederverwendungsfall durch eine neue Banderole als Austauschkomponente überdeckt. Vorteilhaft ist hierbei, dass ohnehin eine neue Produktbeschriftung bei einer Wiederverwendung erforderlich ist und dass mit der Banderole der Aufwand für eine zusätzliche Etikettierung eingespart wird. Insbesondere kann die Banderole vorteilhaft vor deren Anbringung bedruckt werden.

Die Möglichkeit, lediglich einen Teil des Mehrweggebindes für die Erzeugung der Wiederverwendungsfähigkeit austauschen zu müssen ermöglicht es ferner, die Stoffe prozessgerecht zu entsorgen. Die leichte Trennbarkeit und Wiedermontage ermöglichen zudem den Prozess zu automatisieren, was sich ebenfalls positiv auf die Kosten des Mehrweggebindes auswirkt.

In besonderen Anwendungsfällen ist es auch möglich, den Formeinsatz durch einen Waschvorgang zu reinigen, wobei vorzugsweise das Abwasser aus dem Waschvorgang gefiltert und wiederverwendet wird.

Gemäß einer vorteilhaften Weiterbildung ist das Mehrweggebinde dadurch gekennzeichnet, dass der Formeinsatz an einer Formeinsatzinnenseite zumindest in dem Hauptabschnitt eine auskleidende und abziehbare Adhäsionsfolie aufweist.

Nach einer Verwendung und Entleerung des Behälterinhalts kann die Adhäsionsfolie abgezogen werden. Durch die Verwendung der Adhäsionsfolie lässt sich auch der Formeinsatz, der eine Austauschkomponente ist, für eine zweite Befüllung verwenden. Es muss also lediglich bei jeder zweiten Wiederverwendung des Mehrweggebindes der Formeinsatz getauscht werden. Dies verbessert die ökologische Verträglichkeit noch weiter. Bei der industriellen Herstellung des Formeinsatzes wird hierbei vorzugsweise ein Material mit Adhäsionsfolienüberzug verwendet.

In einer weiteren Vorteilhaften Weiterbildung ist das Mehrweggebinde dadurch gekennzeichnet, dass an dem Grundkörperboden außenseitig ein Bodenformteil aus Papierfaserwerkstoff mit einer Imprägnierung angeordnet ist und dass das Bodenformteil und der Deckelgrundkörper korrespondierende Oberflächenformen aufweisen.

Durch das außenseitige, also von unten an den Grundkörperboden angebrachte nachhaltige Bodenformteil erhält der Behälter im Bodenbereich einen zusätzlichen mechanischen Schutz sowie einen zusätzlichen Feuchteschutz. Bei Kunststoff und/oder Metallgebinden dient dieses Bodenformteil z.B. als Schmutzschutz und/oder Stoßschutzelement.

Das Bodenformteil und der Deckelgrundkörper weisen jeweils eine Oberflächenformung auf, die zueinander korrespondieren. Als korrespondierend ist zu verstehen, dass sowohl das Bodenformteil als auch der Deckelgrundkörper Formabschnitte aufweisen, die bei einem Stapel zueinander im Eingriff stehen und so zu einem wirksamen Transportschutz beitragen. Die Formabschnitte der Oberflächenformung können beispielsweise Sicken oder andere Prägungen mit konvexen oder konkaven Formungen sein. Das Bodenformteil ist vorzugsweise als ein Negativ der Oberfläche des Deckelgrundkörpers ausgebildet. Boden und Deckel wirken vorzugsweise in der Art eines Rasterbodens mit einem Rasterdeckel zusammen. Der Boden kann auch eine reine Schmutz- und/oder Stoßschutzfunktion aufweisen.

Nach einer nächsten vorteilhaften Weiterbildung ist das Mehrweggebinde dadurch gekennzeichnet, dass an dem hohlen Grundkörpermantel an der Mantelaußenseite ein Naturfaserbandhenkel befestigt ist.

Der Naturfaserhenkel dient als Transportgriff für das Gebinde. Dadurch verbessert sich vorteilhaft das Handling des Gebindes beim Transport und bei der Anwendung. Da dieser aus Naturfaserband gefertigt ist, wird die Nachhaltigkeit des Mehrweggebindes weiter erhöht. Hierbei weist die Banderole vorzugsweise Ausnehmungen im Bereich der Befestigungsstellen des Naturfaserhenkels an dem Grundkörpermantel auf.

Der Naturfaserhenkel ist besonders bevorzugt an gestanzten Ausnehmungen des Grundkörpermantels befestigt, oder z.B. bei Kunststoffgebinden durch ein Adapterstück realisiert, so dass dieser bei Verschleiß ebenfalls ausgewechselt werden kann, ohne den Grundkörpermantel zu beschädigen und somit die Anzahl der Nutzungszyklen des Mehrweggebindes nicht begrenzt.

Entsprechend einer weiteren vorteilhaften Weiterbildung ist das Mehrweggebinde dadurch gekennzeichnet, dass der hohle Grundkörpermantel aus Wickelpapier ausgebildet ist. Der Grundkörperboden weist eine Bienenwachsimprägnierung auf. Dies dient dazu, dass der Boden nicht aufweicht und die Gesamtverpackung nutzlos macht, wenn diese auf einem feuchten Untergrund steht.

Der Klebering ist nach dieser Weiterbildung aus doppelseitigem Klebeband ausgebildet. Doppelseitiges Klebeband ist standardmäßig verfügbar und geht daher vorteilhaft günstig in die Herstellungskosten für das Mehrweggebinde ein. Es kann aber auch z.B. ein Haft-Hotmelt oder ähnliches verwendet werden.

Die Banderole ist bei dieser Weiterbildung z.B. aus Graspapier ausgebildet und weist Banderolenausnehmungen für den Naturfaserbandhenkel auf. Zudem dient die Banderole für den individuellen Aufdruck des Gebindes. So kann das Gebinde an die jeweiligen Verkaufsfirmen und die beinhaltende Farbe angepasst werden. Beim Wiederverwendungsprozess kann die Kennzeichnung der Verpackung demzufolge leicht ausgetauscht werden.

Ein weiterer Aspekt der Erfindung betrifft ein Regenerationsverfahren für ein Mehrweggebinde, in Überbindung z.B. auch für Kunststoff und Metallgebinde, das wie beschrieben ausgebildet ist. Die Beschreibungsinhalte zur erfindungsgemäßen Vorrichtung gelten zu dem erfindungsgemäßen Verfahren in entsprechender Weise unter Einbeziehung der nachfolgenden Aspekte.

Das Regenerationsverfahren weist folgende Verfahrensschritte auf:
a) Lösen und Entfernen der Deckelformfolie
b) Einsetzen einer neue Deckelformfolie
c) Abziehen und Entfernen der Adhäsionsfolie
d) Abziehen und Entfernen der Banderole, ggf. ebenfalls des Bodens (z.B. Schmutz- und/oder Stoßschutz bei Kunststoff- und/oder Metallgebinden)
e) Anordnen einer neuen Banderole an der Mantelaußenseite und Herstellen eines neuen Klebeverbunds mittels einer neuen Kontaktklebenaht und Herstellen einer neuen axial erstreckten Banderolenklebenaht

Nach einer Verwendung und nach vollständiger Entleerung des Behälterinhalts wird im Verfahrensschritt a) die Deckelformfolie, die in der Regel durch Farbspuren verunreinigt ist, von dem Deckelgrundkörper gelöst und es wird nachfolgend im Verfahrensschritt b) eine neue Deckelformfolie eingesetzt. Weiterhin wird im Verfahrensschritt c) die ebenfalls durch Farbspuren verunreinigte Adhäsionsfolie abgezogen. Es erfolgt noch im Verfahrensschritt d) das Abziehen und Entfernen der Banderole sowie im Verfahrensschritt e) das Anordnen einer neuen Banderole an der Mantelaußenseite und das Herstellen eines neuen Klebeverbunds mittels einer neuen Kontaktklebenaht sowie das Herstellen einer neuen axial erstreckten Banderolenklebenaht.

Nach diesem Recyclingverfahren, nachfolgend partielles Recyclingverfahren genannt, sind alle Farbverunreinigungen an den behälterinhaltsberührenden Oberflächen beseitigt und das Mehrweggebinde kann erneut verwendet werden.

Ein weiterer Aspekt der Erfindung betrifft ein weiteres Regenerationsverfahren für ein Mehrweggebinde, das wie beschrieben ausgebildet ist. Die Beschreibungsinhalte zur erfindungsgemäßen Vorrichtung gelten auch zu diesem erfindungsgemäßen Verfahren in entsprechender Weise unter Einbeziehung der nachfolgenden Aspekte. Das Regenerationsverfahren weist folgende Verfahrensschritte auf:
a) Lösen und Entfernen der Deckelformfolie
b) Einsetzen einer neue Deckelformfolie
d) Abziehen und Entfernen der Banderole
d1) Lösen und Entfernen des Formeinsatzes und des Kleberings
d2) Einsetzen eines neuen Formeinsatzes in den Behältergrundkörper und Positionieren eines neuen Überkrempungsabschnitt an dem hohlen Grundkörpermantel an dem Mantelrandabschnitt und Anordnen eines neuen Kleberings
e) Anordnen einer neuen Banderole an der Mantelaußenseite und Herstellen eines neuen Klebeverbunds mittels einer neuen Kontaktklebenaht und Herstellen einer neuen axial erstreckten Banderolenklebenaht

Dieses weitere Regenerationsverfahren wird nachfolgend auch als umfassendes Regenerationsverfahren bezeichnet. Es unterscheidet sich von dem partiellen Regenerationsverfahren durch die zusätzlichen Verfahrensschritte d1) und d2) sowie durch den Entfall des Verfahrensschritts c). Hierbei werden alle Austauschkomponenten von den Wiederverwertungskomponenten getrennt und durch neue Austauschkomponenten ersetzt. Im Ergebnis steht ein vollständig regeneriertes Mehrweggebinde bereit. Der Materialeinsatz ist höher als bei einem partiellen Regenerationsverfahren. Vorteilhaft sind damit jedoch praktisch alle Teile des Mehrweggebindes erneut ertüchtigt, die der vorangegangenen Verwendung unterlagen. Das umfassende Regenerationsverfahren ist vorteilhaft zudem sowohl mit einem Formeinsatz mit Adhäsionsfolie als auch mit einem Formeinsatz ohne Adhäsionsfolie durchführbar.

Vorteilhaft ist es möglich, bei Verwendung eines Formeinsatzes mit Adhäsionsfolie das partielle Regenerationsverfahren und das umfassende Regenerationsverfahren in wechselnder Abfolge durchzuführen.

Vorzugsweise kann zudem das Bodenformteil entfernt und durch ein neues Bodenformteil ersetzt werden.

Fast sämtliche Anforderungen können gemäß Artikel 10 PPWR EU-VerpackV 2025 für Wiederverwendbare Verpackungen durch die erfindungsgemäße Vorrichtung erfüllt werden:
Die Erfindung wird als Ausführungsbeispiel anhand von
Fig. 1 Explosionsdarstellung als Schrägbildansicht (schematisch)
Fig. 2 Explosionsdarstellung als Schrägbildansicht mit Bodenformteil (schematisch) näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

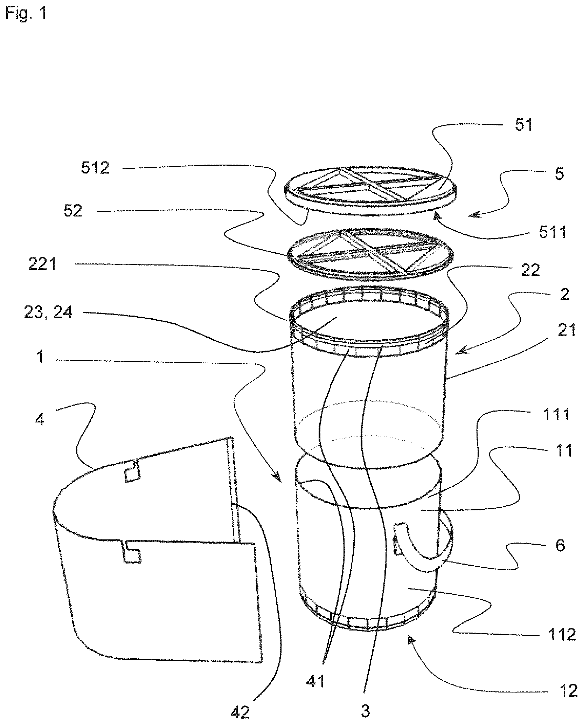

Die Fig. 1 zeigt in einer Schrägbild-Explosionsdarstellung die Einzelteile in einer Ausführung des Mehrweggebindes.

Dieses wird ausgehend von dem Behältergrundkörper 1 beschrieben. Dieser weist einen hohlzylindrischen Grundkörpermantel 11 auf, der an seiner Mantelaußenseite 112 eine zylindrische Außenform aufweist. In einem modifizierten Ausführungsbeispiel handelt es sich um eine leicht konische Form. Im Bodenbereich ist der Grundkörpermantel 11 mit dem hier verdeckten Grundkörperboden 12 verschlossen, so dass sich ein Innenraum bildet.

In den Behältergrundkörper 1 wird ein flüssigkeits- und diffusionsdichter Formeinsatz 2 aus einer vorgeformten Kunststofffolie eingesetzt. Der Hauptabschnitt 21 des Formeinsatzes 2 fügt sich vollständig in den Behältergrundkörper 1 ein und schmiegt sich innenseitig an dessen Wandungen an. Zur besseren Positionierung weist der Formeinsatz am oberen Ende einen Überkrempungsabschnitt 22 auf. Dieser umschließt vollständig den oberen Mantelrandabschnitt 111 des Grundkörpermantels 11.

Zur Fixierung der Überkrempungsaußenseite 221 ist ein Klebering 3 angebracht, durch den der Überkrempungsabschnitt 22 fest an der Mantelaußenseite 112 im oberen Mantelrandabschnitt 111 angelegt wird, ohne dass ein direkter Klebekontakt zu dem Behältergrundkörper besteht.

Der Klebering 3 dient der Befestigung der Banderole 4, die den Grundkörpermantel 11 an der Mantelaußenseite 112 vollständig umschließt und dort eine umlaufende Kontaktklebenaht 41 mit den Klebering 3 ausbildet. Ferner wird die Banderole 4 mit der axialen Banderolenklebenaht 41 verschlossen. Die Banderole 4 ist somit nicht direkt mit dem Behältergrundkörper 1 verklebt, wodurch ein Regenerationsverfahren erleichtert wird.

Am Grundkörpermantel 11 ist in dem Ausführungsbeispiel zudem im oberen Drittel der Mantelaußenseite 112 ein Naturfaserbandhenkel 6 angebracht. Der Naturfaserbandhenkel ist hierbei durch gestanzte Ausnehmungen im Grundkörpermantel 11 geführt und kann somit bei einem Verschleiß problemlos entfernt und erneuert werden. Hierfür ist auch die Banderole 4 an den überlappenden Bereichen der Naturfaserbandhenkels 6 ausgespart.

Auf den Behältergrundkörper 1 wird zur Stabilisierung und Abdichtung ein Deckel 5 aufgesetzt. Dieser besteht aus dem Deckelgrundkörper 51 und einer angesetzten Deckelformfolie 52, die sich an der Deckelgrundkörperinnenseite 512 anschmiegt. Der Deckel 5 überkragt zum Verschließen des Behältergrundkörpers 1 dessen Überkrempungsabschnitt 22 mit seiner Randnut 511. Dadurch werden die Deckelformfolie 52 und der Formeinsatz 2 an seinem Überkrempungsabschnitt 22 an einer umlaufenden Linie direkt aufeinander gepresst und es wird eine zuverlässige Abdichtung des Behälterinhalts erreicht.

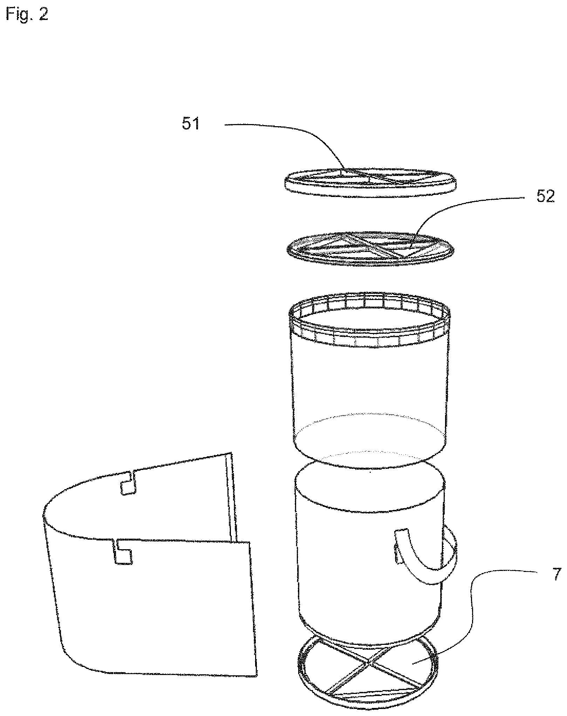

Die Fig. 2 zeigt in einer Schrägbild-Explosionsdarstellung ein weiteres Ausführungsbeispiel des Mehrweggebindes. Dieses Ausführungsbeispiel weist über das Ausführungsbeispiel gemäß Fig. 1 hinaus ein Bodenformteil 7 auf. Das Bodenformteil 7 ist von unten mittels Klebepunkten an dem Grundkörperboden 12 befestigt.

Wie Fig. 2 weiter zeigt, weist das Bodenformteil 7 von unten betrachtet eine Formung als gekreuzte Nut auf, die mit einem von oben betrachtet gekreuzten Steg des Deckelgrundkörpers 52 korrespondiert. Werden zwei gleichartige Mehrweggebinde übereinander gestapelt, greifen die Formungen des Bodenformteils 7 und des Deckelgrundkörpers 52 ineinander, so dass diese verschiebe- und verdrehsicher gestapelt werden können. Da der Deckelgrundkörper 52 auf seiner Deckelgrundkörperinnenseite 512 die gleiche Formung - hier als Negativ der Deckelgrundkörperoberseite - aufweist, ist zugleich die Deckelformfolie 52 in der Formung gleich zu dem Bodenformteil 7 ausgebildet.

### Verwendete Bezugszeichen

- 1: Behältergrundkörper
- 11: Grundkörpermantel
- 111: Mantelrandabschnitt
- 112: Mantelaußenseite
- 12: Grundkörperboden
- 2: Formeinsatz
- 21: Hauptabschnitt
- 22: Überkrempungsabschnitt
- 221: Überkrempungsaußenseite
- 23: Formeinsatzinnenseite
- 24: Adhäsionsfolie
- 3: Klebering
- 4: Banderole
- 41: Kontaktklebenaht
- 42: Banderolenklebenaht
- 5: Deckel
- 51: Deckelgrundkörper
- 511: Randnut
- 512: Deckelgrundkörperinnenseite
- 52: Deckelformfolie
- 6: Naturfaserbandhenkel
- 7: Bodenformteil

## Patentansprüche

1. Mehrweggebinde,
aufweisend einen Behältergrundkörper (1), einen Formeinsatz (2), einen Klebering (3), eine Banderole (4) und einen Deckel (5),
wobei der Behältergrundkörper (1) einen hohlen, vorzugweise zylindrischen, oval-konisch oder eckigen, Grundkörpermantel (11) und einen Grundkörperboden (12) aufweist und aus einem Papierfaserwerkstoff, Kunststoffwerkstoff und/oder Metallwerkstoff ausgebildet ist,
wobei der Formeinsatz (2) aus einem Kunststofffolienmaterial ausgebildet ist, einen behälterförmigen Hauptabschnitt (21) aufweist, der in dem Behältergrundkörper (1) angeordnet ist und diesen auskleidet, weiter einen Überkrempungsabschnitt (22) aufweist, der den hohlen Grundkörpermantel (11) an einem Mantelrandabschnitt (111) übergreift,
wobei der Klebering (3) an einer Überkrempungsaußenseite (221) angeordnet ist,
wobei die Banderole (4) umlaufend an einer Mantelaußenseite (112) angeordnet ist, den Überkrempungsabschnitt (22) und den hohlen Grundkörpermantel 11) an der Mantelaußenseite (112) umschließt, an einer umlaufenden Kontaktklebenaht (41) in einem Klebeverbund mit dem Klebering (3) steht und eine axial erstreckte Banderolenklebenaht (42) aufweist, wobei der Deckel (5) einen formstabilen Deckelgrundkörper (51) aufweist, der eine umlaufende axiale Randnut (511) und eine Deckelformfolie (52) aufweist, die an dem Deckelgrundkörper (51) an einer Deckelgrundkörperinnenseite (512) angeordnet ist,
wobei das Mehrweggebinde für einen Verschlusszustand ausgebildet ist, in welchem der Deckel (5) auf den hohlen Grundkörpermantel (11) aufgesetzt ist, vorzugsweise wobei die axiale Randnut (511) des Deckelgrundkörpers (51) den Mantelrandabschnitt (111) übergreift und zwischen der axialen Randnut (511) und dem Mantelrandabschnitt (111) die Deckelformfolie (52) umlaufend dichtend gegen den Formeinsatz (2) gepresst ist,
wobei der Behältergrundkörper (1) und Deckelgrundkörper (51) als Wiederverwendungskomponenten und
wobei der Formeinsatz (2), der Klebering (3), die Banderole (4) und die Deckelformfolie (52) als mit den Wiederverwendungskomponenten lösbar verbundene Austauschkomponenten ausgebildet sind.

2. Mehrweggebinde nach Anspruch 1,
**dadurch gekennzeichnet,**
**dass** der Formeinsatz (2) an einer Formeinsatzinnenseite (23) zumindest in dem Hauptabschnitt (21) eine auskleidende und abziehbare Adhäsionsfolie (24) aufweist.

3. Mehrweggebinde nach einem der vorhergehenden Ansprüche,
**dadurch gekennzeichnet,**
**dass** an dem Grundkörperboden (12) außenseitig eine Bodenformteil (7) angeordnet ist und dass das Bodenformteil (7) und der Deckelgrundkörper (51) eine korrespondierende Oberflächenform aufweisen.

4. Mehrweggebinde nach einem der vorhergehenden Ansprüche,
**dadurch gekennzeichnet,**
**dass** an dem hohlen Grundkörpermantel (11) an der Mantelaußenseite (112) ein Naturfaserbandhenkel (6) befestigt ist.

5. Mehrweggebinde nach einem der vorhergehenden Ansprüche,
**dadurch gekennzeichnet,**
**dass** der hohle Grundkörpermantel (11) aus Wickelpapier ausgebildet ist, der Grundkörperboden (12) eine Bienenwachsimprägnierung (121) aufweist, der Klebering (3) aus doppelseitigem Klebeband ausgebildet ist,
und die Banderole (4) aus Graspapier ausgebildet ist und Banderolenausnehmungen (42) für den Naturfaserbandhenkel (6) aufweist.

6. Regenerationsverfahren für ein Mehrweggebinde
wobei das Mehrweggebinde nach einem der Ansprüche 2 bis 5 ausgebildet ist, aufweisend folgende Verfahrensschritte:
a) Lösen und Entfernen der Deckelformfolie (52),
b) Einsetzen einer neue Deckelformfolie,
c) Abziehen und Entfernen der Adhäsionsfolie (24),
d) Abziehen und Entfernen der Banderole,
e) Anordnen einer neuen Banderole an der Mantelaußenseite (112) und Herstellen eines neuen Klebeverbunds mittels einer neuen Kontaktklebenaht und Herstellen einer neuen axial erstreckten Banderolenklebenaht.

7. Regenerationsverfahren für ein Mehrweggebinde
- -wobei das Mehrweggebinde nach einem der Ansprüche 1 bis 5 ausgebildet ist, aufweisend folgende Verfahrensschritte:
a) Lösen und Entfernen der Deckelformfolie (52),
b) Einsetzen einer neuen Deckelformfolie,
d) Abziehen und Entfernen der Banderole (4),
d1) Lösen und Entfernen des Formeinsatzes (2) und des Kleberings (3),
d2) Einsetzen eines neuen Formeinsatzes in den Behältergrundkörper (1), und Positionieren eines neuen Überkrempungsabschnitt an dem hohlen Grundkörpermantel (11) an dem Mantelrandabschnitt (111) und Anordnen eines neuen Kleberings,
e) Anordnen einer neuen Banderole an der Mantelaußenseite (112) und Herstellen eines neuen Klebeverbunds mittels einer neuen Kontaktklebenaht und Herstellen einer neuen axial erstreckten Banderolenklebenaht.

## Claims

1. Reuseable bottle,
indicating a base container body (1), a form insert (2), an adhesive ring (3), a sleeve (4), and a lid (5),
whereby the base container body (1) has a hollow, preferably cylindrical, oval-conical, or square base body shell (11) and a base body bottom (12) and is made of a paper fibre material, plastic, and/ or metal material, whereby the form insert (2) consists of a plastic film material, and has a bottle-shaped main section (21), which is arranged inside the base container body (1) and lines it, and also has an overlapping section (22), which covers the hollow base body shell (11) extending over an overlapping section (111), whereby the adhesive ring (3) is aligned with the exterior of the overlapping section (221), whereby the sleeve (4) which is aligned to cover the perimeter of the base body shell (112), the overlapping section (22) and encloses the hollow base body shell (11) along the perimeter of the base body shell (112), and runs along a surrounding contact bond seam (41) in an adhesive bond with the adhesive ring (3) and has an axially extending sleeve adhesive bond sleeve (42), whereby the lid (5) has a solid base body for the lid (51), which has an axially running thread along the edge (511) and has a film conforming to the shape of the lid (52), which is aligned with the lid base body (51) along the interior of the lid base body (512),
whereby the reuseable bottle is constructed to remain in a closed state, in which the lid (5) is set upon the hollow base body shell (11), preferably in such a way that the axial perimeter thread running along the edge (511) of the base body for the lid (51) extends over the overlapping section (111) and, between the axial perimeter thread (511) and the overlapping section (111), the film conforming to the shape of the lid (52) is pressed against the form insert (2) in such a way that it creates a seal,
whereby the base container body (1) and the base body for the lid (51) are constructed as reuseable components and whereby the form insert (2), the adhesive ring (3), the sleeve (4) and the film confirming to the shape of the lid (52) are constructed as separable replaceable components which can be separated from the reuseable components.

2. Reuseable bottle as described in claim 1,
**characterized by** the traits,
that the form insert (2) exhibits along one side of the form insert's interior (23) at least in the main section (21), an adhesive film (24) which aligns with it and can be peeled off.

3. Reuseable bottle as described in one of the previous claims,
**characterized by** the traits,
that a bottom form component (7) is arranged along the exterior of the base body bottom (12) and the base body of the lid (51) has a surface form matching it.

4. Reuseable bottle as described in one of the previous claims,
**characterized by** the traits,
that a handle made of natural fibres (6) is attached to the hollow base body shell (11) along the exterior of the shell (112).

5. Reuseable bottle as described in one of the previous claims,
**characterized by** the traits,
that the hollow base body shell (11) is made out of paper wrapping, the base body bottom (12) is impregnated with bee's wax (121), the adhesive ring (3) is made out of double-sided adhesive tape,
and the sleeve (4) is made out of grass papier and has openings in the sleeve (42) for the natural fibre handle (6).

6. Process for regenerating a reuseable bottle
where the reuseable bottle is made in accord with claims 2 through 5, the process is constituted by the following steps;
a) Loosen and remove the film conforming to the shape of the lid (52),
b) Insert a new film for the lid,
c) Pull off and remove the adhesive film (24),
d) Pull off and remove the sleeve,
e) Aligning a new sleeve along the exterior of the shell (112) and make a new adhesive seal using a new contact adhesive seam and make a new adhesive seal for the sleeve extending along the axial surface.

7. Process for regenerating a reuseable bottle
where the reuseable bottle is constructed in accord with one of the claims 1 through 5, the process is constituted by the following steps:
a) Loosen and remove the film conforming to the shape of the lid (52),
b) Insert a new film for the lid,
d) Pull off an remove the sleeve (4),
d1) Loosen and remove the form insert (2) and the adhesive ring (3), d2) Insert a new form insert into the container base body (1),
and position a new overlapping section along the hollow base body shell (11) aligning a new adhesive ring with the edge of the shell (111),
e) Align a new sleeve along the exterior of the shell (112) and establish a new adhesive bond using a new contact adhesive seam and create a new adhesive seam on the sleeve extending axially.

## Revendications

1. Récipient réutilisable,
possédant un corps de base de contenant (1), un insert moulé (2), un anneau adhésif (3), une bande de fermeture (4) et un couvercle (5),
le corps de base de contenant (1) possédant une enveloppe de corps de base (11) creuse, de préférence cylindrique, ovale-conique ou angulaire, et un fond de corps de base (12), et étant réalisé à partir d'un matériau à base de fibres de papier, d'une matière plastique et/ou d'un matériau métallique,
l'insert moulé (2) étant réalisé à partir un matériau en film de plastique, présentant une portion principale (21) en forme de contenant qui est disposée dans le corps de base de contenant (1) et le revêt, possédant en outre une portion rabattue (22) qui recouvre l'enveloppe de corps de base (11) creuse au niveau d'une portion de bord d'enveloppe (111),
l'anneau adhésif (3) étant disposé au niveau d'un côté extérieur de rabat (221), la bande de fermeture (4) étant disposée de manière circonférentielle au niveau d'un côté extérieur d'enveloppe (112), entourant la portion rabattue (22) et l'enveloppe de corps de base (11) creuse au niveau du côté extérieur d'enveloppe (112), se trouvant dans une liaison collée avec l'anneau adhésif (3) au niveau d'une ligne de collage par contact périphérique (41) et possédant une ligne de collage de bande de fermeture (42) qui s'étend axialement, le couvercle (5) possédant un corps de base de couvercle (51) indéformable, qui possède une rainure périphérique axiale (511) circonférentielle et un film moulé de couvercle (52) qui est disposé au niveau du corps de base de couvercle (51) sur un côté intérieur (512) du corps de base de couvercle,
le récipient réutilisable étant configuré pour un état fermé, dans lequel le couvercle (5) est placé sur l'enveloppe de corps de base (11) creuse, la rainure périphérique axiale (511) du corps de base de couvercle (51) recouvrant de préférence la portion de bord d'enveloppe (111) et le film moulé de couvercle (52) étant pressé de manière étanche sur tout le pourtour contre l'insert moulé (2) entre la rainure périphérique axiale (511) et la portion de bord d'enveloppe (111),
le corps de base de contenant (1) et le corps de base de couvercle (51) étant réalisés sous la forme de composants réutilisables et
l'insert moulé (2), l'anneau adhésif (3), la bande de fermeture (4) et le film moulé de couvercle (52) sous la forme de composants à remplacer reliés de manière amovible aux composants réutilisables.

2. Récipient réutilisable selon la
revendication 1, **caractérisé en ce**
**que** l'insert moulé (2) possède, au niveau d'un côté intérieur d'insert moulé (23), au moins dans la portion principale (21), un film adhésif (24) de revêtement et détachable.

3. Récipient réutilisable selon l'une des revendications précédentes,
**caractérisé en ce**
**qu'**une pièce moulée de fond (7) est disposée du côté extérieur au niveau du fond de corps de base (12) et **en ce que** la pièce moulée de fond (7) et le corps de base de couvercle (51) présentent une forme de surface correspondante.

4. Récipient réutilisable selon l'une des revendications précédentes,
**caractérisé en ce**
**qu'**une anse en bande de fibres naturelles (6) est fixée à l'enveloppe de corps de base (11) creuse au niveau du côté extérieur d'enveloppe (112).

5. Récipient réutilisable selon l'une des revendications précédentes,
**caractérisé en ce**
**que** l'enveloppe de corps de base (11) creuse est constituée de papier d'emballage, le fond de corps de base (12) présente une imprégnation de cire d'abeille (121), l'anneau adhésif (3) est constitué de ruban adhésif double face, et la bande de fermeture (4) est réalisée en papier à base d'herbe et possède des évidements de bande de fermeture (42) pour l'anse en bande de fibres naturelles (6).

6. Procédé de régénération pour un récipient réutilisable
le récipient réutilisable étant configuré selon l'une des revendications 2 à 5, comprenant les étapes suivantes :
a) détachement et enlèvement du film moulé de couvercle (52),
b) mise en place d'un nouveau film moulé de couvercle,
c) pelage et enlèvement du film adhésif (24),
d) pelage et enlèvement de la bande de fermeture,
e) disposition d'une nouvelle bande de fermeture au niveau du côté extérieur d'enveloppe (112) et réalisation d'une nouvelle liaison collée au moyen d'une nouvelle ligne de collage par contact et réalisation d'une nouvelle ligne de collage de bande de fermeture qui s'étend axialement.

7. Procédé de régénération pour un récipient réutilisable
le récipient réutilisable étant configuré selon l'une des revendications 1 à 5, comprenant les étapes suivantes :
a) détachement et enlèvement du film moulé de couvercle (52),
b) mise en place d'un nouveau film moulé de couvercle,
d) pelage et enlèvement de la bande de fermeture (4),
d1) détachement et enlèvement de l'insert moulé (2) et de l'anneau adhésif (3),
d2) insertion d'un nouvel insert moulé dans le corps de base de contenant (1),
et positionnement d'une nouvelle portion rabattue au niveau de l'enveloppe de corps de base (11) creuse, au niveau de la portion de bord d'enveloppe (111), et disposition d'un nouvel anneau adhésif,
e) disposition d'une nouvelle bande de fermeture au niveau du côté extérieur d'enveloppe (112) et réalisation d'une nouvelle liaison collée au moyen d'une nouvelle ligne de collage par contact et réalisation d'une nouvelle ligne de collage de bande de fermeture qui s'étend axialement.
